# EUROPEAN PATENT SPECIFICATION

(11) **EP 3 940 210 B1**
(45) Date of publication and mention of the grant of the patent: **27.09.2023**
(21) Application number: 21180100.6
(22) Date of filing: 17.06.2021
(51) Int. Cl.: F01N 3/10

(54) **STRADDLED VEHICLE**
GRÄTSCHSITZFAHRZEUG
VÉHICULE À ENFOURCHER

(30) Priority: 13.07.2020 JP 2020119971
(43) Date of publication of application: 19.01.2022
(73) Proprietor: Yamaha Hatsudoki Kabushiki Kaisha, Iwata-shi, Shizuoka-ken 438-8501 (JP)
(72) Inventor: SUGIMOTO, Kei, Iwata-shi, 438-8501 (JP)
(74) Representative: Grünecker Patent- und Rechtsanwälte PartG mbB

(56) References cited:
- WO-A1-2017/057340
- JP-A- 2001 073 759
- US-A1- 2009 236 175

## Description

The present invention relates to a straddled vehicle according to the preamble of independent claim 1. Such a straddled vehicle can be taken from the prior art document JP 2001 073759 A.

Straddled vehicles known in the related art include catalysts to purify exhaust gas emitted from internal combustion engines. JP 2019-27297 A, for example, discloses a motorcycle including: an exhaust pipe connected to an exhaust port of an internal combustion engine; a case connected to the exhaust pipe; and a catalyst disposed inside the case.

The case housing the catalyst (which will hereinafter be referred to as a "catalyst case") is larger in outside diameter than the exhaust pipe. The catalyst case of the motorcycle is disposed below the internal combustion engine. This unfortunately reduces the minimum road clearance of the motorcycle. A conceivable approach to allowing the motorcycle to have a sufficient minimum road clearance may involve reducing the outside diameter of the catalyst case. Reducing the outside diameter of the catalyst case, however, decreases the volume of the catalyst, resulting in low purification performance.

At a predetermined temperature higher than normal temperatures, the catalyst is activated so as to perform its purification function. The catalyst is activated by being heated by exhaust gas emitted from the internal combustion engine. At a time immediately after the start of the internal combustion engine, the catalyst is relatively low in temperature and is thus unable to perform its purification function. In order to quickly activate the catalyst, the catalyst needs to be heated rapidly. A conceivable approach to rapidly heating the catalyst may involve placing the catalyst close to the internal combustion engine such that exhaust gas higher in temperature is supplied to the catalyst. In other words, such an approach may involve reducing the length of the exhaust pipe between the internal combustion engine and the catalyst case.

JP 2019-183673 A discloses a motorcycle including a catalyst case disposed such that a portion of the catalyst case overlaps with an internal combustion engine in a vehicle side view.

The motorcycle disclosed in JP 2019-183673 A includes an exhaust pipe connecting the internal combustion engine with the catalyst case. The exhaust pipe is short in length, making it possible to rapidly heat a catalyst. Exhaust gas is supplied to the catalyst in the catalyst case immediately after being discharged from a combustion chamber of the internal combustion engine. Exhaust gas immediately after being discharged from the combustion chamber is very high in temperature and tends to result in a nonuniform flow velocity distribution. If such exhaust gas is supplied to the catalyst, a portion of the catalyst may become too high in temperature. In such a case, the catalyst is likely to degrade.

It is the object of the present invention to provide a straddled vehicle that can be provided with a sufficient minimum road clearance, quickly activates a catalyst after the start of an internal combustion engine, and can make the catalyst less prone to degradation. According to the present invention said object is solved by a straddled vehicle having the features of independent claim 1. Preferred embodiments are laid down in the dependent claims.

A straddled vehicle disclosed herein includes an internal combustion engine, an exhaust pipe, an expansion chamber case, a catalyst case, and a catalyst. The internal combustion engine includes a crankcase, a cylinder body, a cylinder head, and an exhaust port. The crankcase supports a crankshaft such that the crankshaft is rotatable. The cylinder body extends upward from the crankcase. The cylinder head extends upward from the cylinder body. The cylinder head includes a front wall. The exhaust port is defined in the front wall of the cylinder head. The exhaust port discharges exhaust gas. The exhaust pipe includes an upstream end and a downstream end. The upstream end is connected to the exhaust port. The exhaust gas flows through the exhaust pipe. The expansion chamber case includes an inlet and an outlet. The inlet is connected to the downstream end of the exhaust pipe. The expansion chamber case is internally provided with an expansion chamber to expand the exhaust gas. The catalyst case includes an inlet connected to the outlet of the expansion chamber case. The catalyst is disposed inside the catalyst case. At least a portion of the catalyst case overlaps with the cylinder body in a vehicle side view.

At least a portion of the catalyst case of the straddled vehicle according to the present teaching is disposed laterally of the cylinder body. Because at least a portion of the catalyst case is disposed above the crankcase, the minimum road clearance of the straddled vehicle according to the present teaching is greater than the minimum road clearance of a straddled vehicle whose catalyst case is disposed below the crankcase. Because at least a portion of the catalyst case is disposed forward of the rear end of the cylinder body, the distance between the exhaust port and the catalyst case of the straddled vehicle according to the present teaching is shorter than that of a straddled vehicle whose catalyst case is disposed rearward of the cylinder body. This enables the catalyst to be heated rapidly after the start of the internal combustion engine, making it possible to quickly activate the catalyst. The straddled vehicle according to the present teaching is provided with the expansion chamber case located between the exhaust pipe and the catalyst case. The exhaust gas that flows through the exhaust pipe expands before flowing into the catalyst case. The exhaust gas thus decreases in temperature and mixes up before flowing into the catalyst case. Accordingly, the exhaust gas whose temperature is suitable for heating the catalyst relatively uniformly flows into the catalyst case. This prevents a portion of the catalyst from being heated to an excessively high temperature. Consequently, the straddled vehicle according to the present teaching prevents or reduces degradation of the catalyst.

In a preferred embodiment, at least a portion of the expansion chamber case is disposed forward of the cylinder body in the vehicle side view.

This embodiment allows a space located forward of the cylinder body to be used as an installation space for at least a portion of the expansion chamber case. This embodiment is thus able to easily prevent the expansion chamber case and the cylinder body from interfering with each other. Consequently, the expansion chamber case having a sufficient volume is placeable without difficulty.

According to the present invention, a volume of the expansion chamber is larger than an inner volume of the catalyst case.

Accordingly, the present invention facilitates maintaining the internal temperature of the catalyst case at a suitable level. Consequently, this embodiment more reliably prevents or reduces degradation of the catalyst.

In another preferred embodiment, a volume of the expansion chamber is twice or more as large as an inner volume of the catalyst case.

This embodiment facilitates maintaining the internal temperature of the catalyst case at a suitable level. Consequently, this embodiment more reliably prevents or reduces degradation of the catalyst.

In yet another preferred embodiment, a flow passage length of the expansion chamber case is longer than a flow passage length of the catalyst case.

This embodiment facilitates maintaining the internal temperature of the catalyst case at a suitable level. Consequently, this embodiment more reliably prevents or reduces degradation of the catalyst.

In still yet another preferred embodiment, a flow passage length of the expansion chamber case is twice or more as long as a flow passage length of the catalyst case.

This embodiment facilitates maintaining the internal temperature of the catalyst case at a suitable level. Consequently, this embodiment more reliably prevents or reduces degradation of the catalyst.

According to the present invention, the catalyst case has a cylindrical shape. An outside diameter of the catalyst case is equal to an inside diameter of the outlet of the expansion chamber case.

According to the present invention, the dimensions of the outlet of the expansion chamber case are substantially equal to the dimensions of the inlet of the catalyst case. The exhaust gas smoothly flows into the catalyst case from the expansion chamber case. The flow velocity distribution of the exhaust gas is thus kept uniform inside the catalyst case. The catalyst is heated evenly by the exhaust gas. Consequently, a portion of the catalyst is prevented from being heated to an excessively high temperature.

In still another preferred embodiment, a flow passage length of the exhaust pipe is longer than a flow passage length of the expansion chamber case.

If the flow passage length of the exhaust pipe is too short, the performance of the internal combustion engine may decrease owing to pulsation of exhaust gas. This embodiment, however, allows the exhaust pipe to have a sufficiently long flow passage length and thus prevents or reduces the possibility of a decrease in performance of the internal combustion engine.

According to the present invention, the expansion chamber case is curved such that the expansion chamber case extends upward and then rearward in the vehicle side view.

According to the present invention, it is able to reduce the dimensions of the expansion chamber case in an up-down direction and a front-rear direction. Consequently, this embodiment is able to reduce the size of the expansion chamber case while allowing the expansion chamber to have a sufficiently large volume.

According to the present invention a vehicle width outer end of the expansion chamber case is located inward of a vehicle width outer end of the crankcase in a vehicle width direction.

According to the present invention, it is able to reduce the dimensions of an entirety of the internal combustion engine and an entirety of the expansion chamber case in the vehicle width direction.

In another preferred embodiment, a flow passage width of the expansion chamber case in the vehicle side view is larger than a flow passage width of the exhaust pipe in the vehicle side view, and/or a flow passage width of the expansion chamber case in a vehicle front view is larger than a flow passage width of the exhaust pipe in the vehicle front view.

This embodiment allows the expansion chamber to have a sufficiently large volume so as to facilitate maintaining the internal temperature of the catalyst case at a suitable level.

In still another preferred embodiment, an entirety of the catalyst case overlaps with the cylinder body in the vehicle side view.

The distance between the exhaust port and the catalyst case of the straddled vehicle according to this embodiment is shorter than that of a straddled vehicle whose catalyst case is disposed rearward of the cylinder body. Consequently, this embodiment is able to quickly activate the catalyst after the start of the internal combustion engine while preventing or reducing degradation of the catalyst.

The internal combustion engine may be a single-cylinder internal combustion engine.

In yet another preferred embodiment, the expansion chamber case is disposed rightward of the exhaust port, and the exhaust pipe includes a portion extending downward and leftward. In still yet another preferred embodiment, the expansion chamber case is disposed leftward of the exhaust port, and the exhaust pipe includes a portion extending downward and rightward.

If the flow passage length of the exhaust pipe is too short, the performance of the internal combustion engine may decrease owing to pulsation of exhaust gas. This embodiment, however, allows the exhaust pipe to have a sufficiently long flow passage length and thus enables the internal combustion engine to achieve its intended performance.

In another preferred embodiment, the straddled vehicle further includes an oxygen sensor fitted to the expansion chamber case. The oxygen sensor detects an oxygen concentration of the exhaust gas.

In this embodiment, the expansion chamber case is used as a portion to be fitted with the oxygen sensor. This embodiment thus makes it unnecessary to fit the oxygen sensor to the catalyst case or the exhaust pipe.

### Advantageous Effects of Invention

Various embodiments of the present invention provide a straddled vehicle that has a sufficient minimum road clearance, quickly activates a catalyst after the start of an internal combustion engine, and makes the catalyst less prone to degradation.

### BRIEF DESCRIPTION OF DRAWINGS

FIG. 1 is a right side view of a motorcycle.
FIG. 2 is a side view of an internal combustion engine, an exhaust pipe, an expansion chamber case, and a catalyst case.
FIG. 3 is a side view of an exhaust system.
FIG. 4 is a front view of the internal combustion engine and the exhaust system.
FIG. 5 is a cross-sectional view of the exhaust pipe, the expansion chamber case, and the catalyst case.
FIG. 6 is a cross-sectional view of the expansion chamber case and the catalyst case.

### DESCRIPTION OF EMBODIMENTS

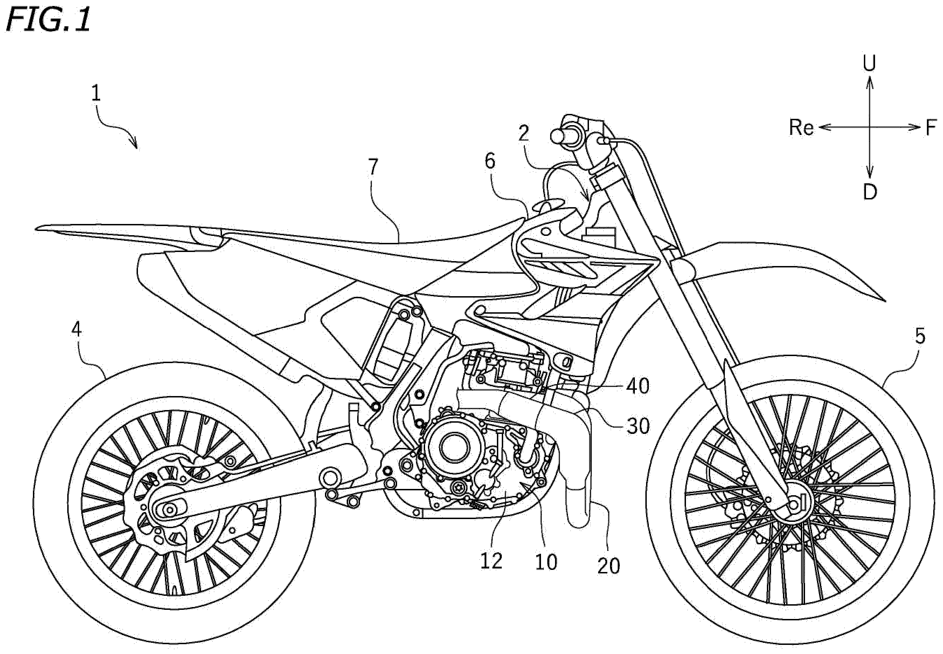

An embodiment of the present teaching will be described below with reference to the drawings. FIG. 1 is a right side view of a motorcycle 1. The motorcycle 1 is an example of a straddled vehicle. The motorcycle 1 includes a vehicle body frame 2, an internal combustion engine 10 (hereinafter referred to as an "engine 10"), a rear wheel 4, a front wheel 5, a fuel tank 6, and a seat 7. The internal combustion engine 10 is supported by the vehicle body frame 2. The rear wheel 4 is driven by the engine 10. A rider sits on the seat 7.

Unless otherwise specified, the terms "front", "rear", "left", "right", "up", and "down" in the following description respectively refer to front, rear, left, right, up, and down with respect to a virtual rider sitting on the seat 7 when the motorcycle 1 with no rider or luggage is at rest in an upright position on a horizontal plane. The reference signs "F", "Re", "L", "R", "U", and "D" in the drawings respectively refer to front, rear, left, right, up, and down.

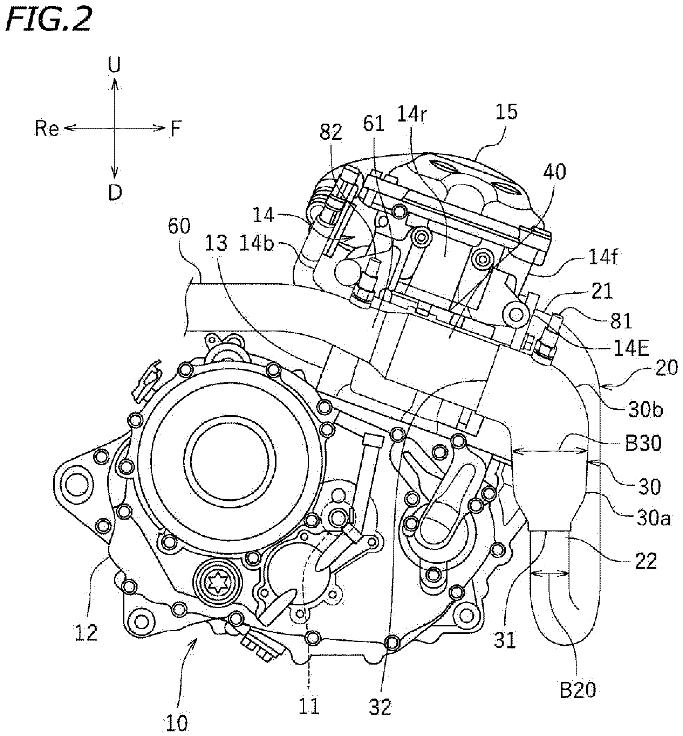

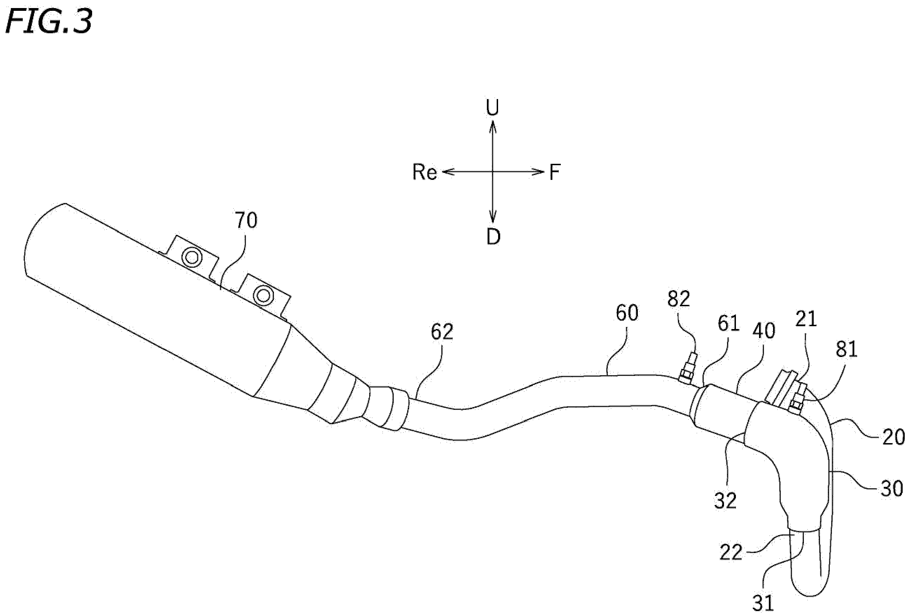

As illustrated in FIG. 2, the motorcycle 1 includes an intake pipe (not illustrated), an exhaust pipe 20, an expansion chamber case 30, and a catalyst case 40. The intake pipe and the exhaust pipe 20 are connected to the engine 10. The expansion chamber case 30 is connected to the exhaust pipe 20. The catalyst case 40 is connected to the expansion chamber case 30. As illustrated in FIG. 3, the motorcycle 1 further includes an exhaust pipe 60 and a silencer 70. The exhaust pipe 60 is connected to the catalyst case 40. The silencer 70 is connected to the exhaust pipe 60.

As illustrated in FIG. 2, the engine 10 includes a crankcase 12, a cylinder body 13, a cylinder head 14, and a cylinder head cover 15. The crankcase 12 supports a crankshaft 11 such that the crankshaft 11 is rotatable. The cylinder body 13 extends upward from the crankcase 12. The cylinder head 14 extends upward from the cylinder body 13. The cylinder head cover 15 is connected to the cylinder head 14. In this embodiment, the engine 10 is a single-cylinder internal combustion engine. The cylinder body 13 is internally provided with a single cylinder. The cylinder head 14 includes a front wall 14f, a rear wall 14b, a right wall 14r, and a left wall (not illustrated). The front wall 14f is provided with an exhaust port 14E to discharge exhaust gas. Although not illustrated, the rear wall 14b is provided with an intake port. The intake port is connected with the intake pipe.

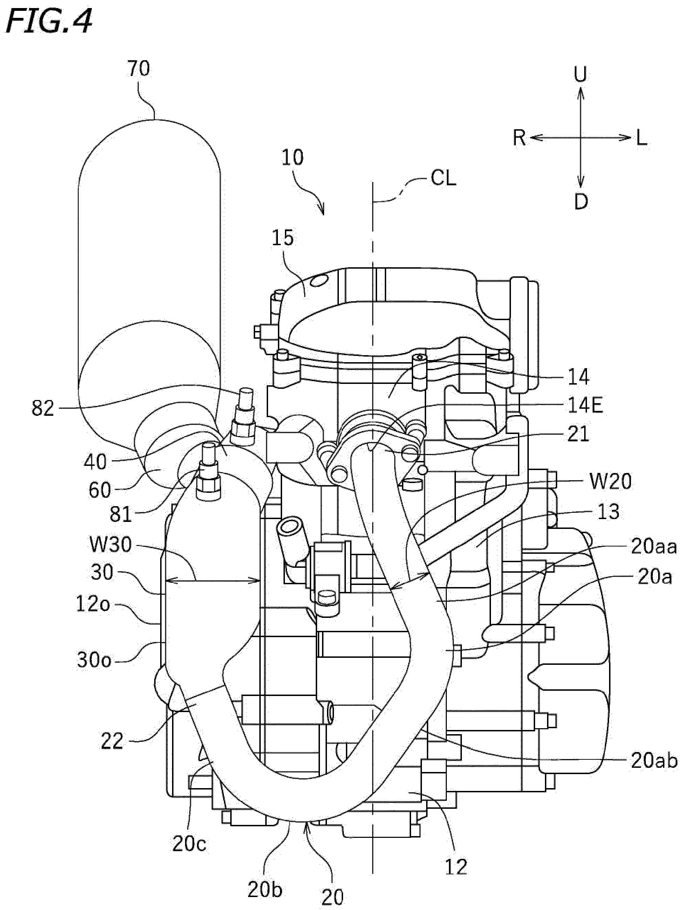

The exhaust pipe 20 includes an upstream end 21 and a downstream end 22. The upstream end 21 is connected to the exhaust port 14E. As illustrated in FIG. 4, the exhaust pipe 20 further includes a first part 20a, a second part 20b, and a third part 20c. The first part 20a extends downward from the upstream end 21. The second part 20b extends rightward from the first part 20a. The third part 20c extends upward from the second part 20b to the downstream end 22. The first part 20a includes a portion 20aa and a portion 20ab. The portion 20aa extends downward and leftward. The portion 20ab extends downward and rightward. Although the inside and outside diameters of the exhaust pipe 20 do not necessarily have to be constant, the exhaust pipe 20 has constant inside and outside diameters in the present embodiment.

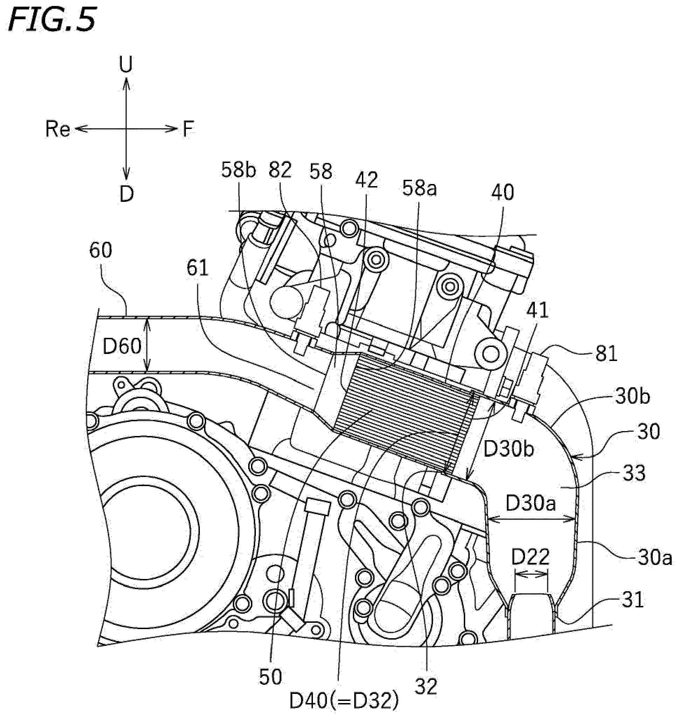

As illustrated in FIG. 2, the expansion chamber case 30 includes an inlet 31 and an outlet 32. The downstream end 22 of the exhaust pipe 20 is connected to the inlet 31. As illustrated in FIG. 4, the expansion chamber case 30 is disposed rightward of the exhaust port 14E. The expansion chamber case 30 is disposed rightward of a vehicle central line CL. As illustrated in FIG. 5, the expansion chamber case 30 is internally provided with an expansion chamber 33 to expand exhaust gas. In the vehicle side view, the expansion chamber case 30 is curved such that the expansion chamber case 30 extends upward and then rearward. The expansion chamber case 30 includes a first portion 30a and a second portion 30b. The first portion 30a extends upward from the inlet 31. The second portion 30b extends rearward from the first portion 30a to the outlet 32. The first portion 30a has an inside diameter D30a. The second portion 30b has an inside diameter D30b. The downstream end 22 of the exhaust pipe 20 has an inside diameter D22. The inside diameter D30a and the inside diameter D30b are each larger than the inside diameter D22. The expansion chamber 33 is larger in flow passage cross-sectional area than the exhaust pipe 20. Exhaust gas thus expands upon flowing into the expansion chamber 33 from the exhaust pipe 20.

The catalyst case 40 has a cylindrical shape. The catalyst case 40 includes an inlet 41 and an outlet 42. The inlet 41 is connected to the outlet 32 of the expansion chamber case 30. The outlet 42 is located rearward of the inlet 41. The catalyst case 40 extends rearward. A catalyst 50 is disposed inside the catalyst case 40. A portion of the catalyst case 40 is inserted into the expansion chamber case 30. The catalyst case 40 has an outside diameter D40. The outlet 32 of the expansion chamber case 30 has an inside diameter D32. The outside diameter D40 is equal to the inside diameter D32.

The exhaust pipe 60 is connected to the catalyst case 40 through a different diameter joint 58. The outlet 42 of the catalyst case 40 is connected to a large diameter portion 58a of the different diameter joint 58. An upstream end 61 of the exhaust pipe 60 is connected to a small diameter portion 58b of the different diameter joint 58. The outside diameter D40 of the catalyst case 40 is larger than an outside diameter D60 of the exhaust pipe 60. The exhaust pipe 60 extends rearward.

As illustrated in FIG. 3, the silencer 70 is connected to a downstream end 62 of the exhaust pipe 60. The silencer 70 is disposed rearward of the exhaust pipe 60. The silencer 70 extends rearward.

As illustrated in FIG. 2, at least a portion of the catalyst case 40 overlaps with the cylinder body 13 in the vehicle side view. In this embodiment, an entirety of the catalyst case 40 overlaps with the cylinder body 13 in the vehicle side view. The catalyst case 40 is disposed laterally of the cylinder body 13. In this embodiment, the catalyst case 40 is disposed rightward of the cylinder body 13.

In the vehicle side view, at least a portion of the expansion chamber case 30 is disposed forward of the cylinder body 13. In this embodiment, a first portion of the expansion chamber case 30 is disposed forward of the cylinder body 13. A second portion of the expansion chamber case 30 overlaps with the cylinder body 13 in the vehicle side view. The second portion of the expansion chamber case 30 is disposed laterally of the cylinder body 13.

As illustrated in FIG. 4, a vehicle width outer end 30o of the expansion chamber case 30 is located inward of a vehicle width outer end 12o of the crankcase 12 in a vehicle width direction. As used herein, the term "inward in the vehicle width direction" refers to a direction toward the vehicle central line CL. As used herein, the term "outward in the vehicle width direction" refers to a direction away from the vehicle central line CL. In this embodiment, the expansion chamber case 30 is disposed rightward of the vehicle central line CL. The vehicle width outer end 30o of the expansion chamber case 30 is the right end of the expansion chamber case 30. The right end of the expansion chamber case 30 is located leftward of the right end of the crankcase 12.

As illustrated in FIG. 5, the volume of the expansion chamber 33 is larger than the inner volume of the catalyst case 40. In this embodiment, the volume of the expansion chamber 33 is twice or more as large as the inner volume of the catalyst case 40.

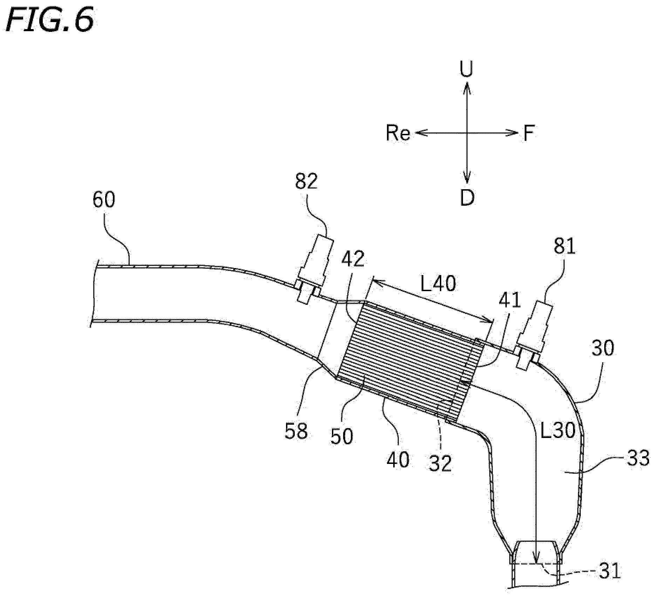

As illustrated in FIG. 6, the expansion chamber case 30 has a flow passage length L30, and the catalyst case 40 has a flow passage length L40. The flow passage length L30 is longer than the flow passage length L40. In this embodiment, the flow passage length L30 of the expansion chamber case 30 is twice or more as long as the flow passage length L40 of the catalyst case 40.

As illustrated in FIG. 4, the flow passage length of the exhaust pipe 20 is longer than the flow passage length of the expansion chamber case 30. In this embodiment, the flow passage length of the exhaust pipe 20 is twice or more as long as the flow passage length of the expansion chamber case 30.

As illustrated in FIG. 2, the expansion chamber case 30 has a flow passage width B30 in the vehicle side view, and the exhaust pipe 20 has a flow passage width B20 in the vehicle side view. The flow passage width B30 is larger than the flow passage width B20. As illustrated in FIG. 4, the expansion chamber case 30 has a flow passage width W30 in a vehicle front view, and the exhaust pipe 20 has a flow passage width W20 in the vehicle front view. The flow passage width W30 is larger than the flow passage width W20. As used herein, the term "flow passage width of the expansion chamber case 30" refers to a dimension of the expansion chamber case 30 measured in a direction perpendicular to the central line of the expansion chamber case 30. As used herein, the term "flow passage width of the exhaust pipe 20" refers to a dimension of the exhaust pipe 20 measured in a direction perpendicular to the central line of the exhaust pipe 20. The term "flow passage width in the vehicle side view" refers to an average flow passage width in the vehicle side view when the flow passage width is not constant. The term "flow passage width in the vehicle front view" refers to an average flow passage width in the vehicle front view when the flow passage width is not constant.

As illustrated in FIG. 2, the expansion chamber case 30 is fitted with a first oxygen sensor 81. The exhaust pipe 60 is fitted with a second oxygen sensor 82. Each of the first and second oxygen sensors 81 and 82 is a sensor to detect the concentration of oxygen contained in exhaust gas. The first oxygen sensor 81 is disposed upstream of the catalyst case 40. The first oxygen sensor 81 detects the concentration of oxygen contained in exhaust gas before being purified by the catalyst 50. The second oxygen sensor 82 is disposed downstream of the catalyst case 40. The second oxygen sensor 82 detects the concentration of oxygen contained in exhaust gas after being purified by the catalyst 50.

The structure of the motorcycle 1 has been described thus far. Various effects achieved by the motorcycle 1 will be described below.

As illustrated in FIG. 2, the motorcycle 1 according to the present embodiment includes the catalyst case 40, at least a portion of which overlaps with the cylinder body 13 in the vehicle side view and is disposed laterally of the cylinder body 13. Because at least a portion of the catalyst case 40 is disposed above the crankcase 12, the minimum road clearance of the motorcycle 1 is greater than the minimum road clearance of a motorcycle whose catalyst case 40 is disposed below the crankcase 12. Because at least a portion of the catalyst case 40 is disposed forward of the rear end of the cylinder body 13, the distance between the exhaust port 14E and the catalyst case 40 of the motorcycle 1 is shorter than that of a motorcycle whose catalyst case 40 is disposed rearward of the cylinder body 13. This enables the catalyst 50 to be heated rapidly after the start of the engine 10, making it possible to quickly activate the catalyst 50. The motorcycle 1 is provided with the expansion chamber case 30 located between the exhaust pipe 20 and the catalyst case 40. Exhaust gas that flows through the exhaust pipe 20 expands before flowing into the catalyst case 40. The exhaust gas thus decreases in temperature before flowing into the catalyst case 40. The exhaust gas mixes up inside the expansion chamber case 30. If the exhaust gas has a nonuniform flow velocity distribution inside the exhaust pipe 20, the flow velocity distribution of the exhaust gas would be made uniform in the expansion chamber case 30. Accordingly, the exhaust gas whose temperature is suitable for heating the catalyst 50 relatively uniformly flows into the catalyst case 40. This prevents a portion of the catalyst 50 from being heated to an excessively high temperature. Consequently, the present embodiment prevents or reduces degradation of the catalyst 50.

In the present embodiment, at least a portion of the expansion chamber case 30 is disposed forward of the cylinder body 13 in the vehicle side view. A space located forward of the cylinder body 13 is thus used as an installation space for at least a portion of the expansion chamber case 30. The present embodiment is able to easily prevent the expansion chamber case 30 and the cylinder body 13 from interfering with each other. Consequently, the expansion chamber case 30 having a sufficient size is placeable without difficulty.

In the present embodiment, the volume of the expansion chamber 33 is larger than the inner volume of the catalyst case 40. The volume of the expansion chamber 33 is twice or more as large as the inner volume of the catalyst case 40. The expansion chamber 33 has a large volume and thus causes exhaust gas to sufficiently expand and sufficiently decrease in temperature. This facilitates maintaining the internal temperature of the catalyst case 40 at a suitable level. Consequently, the present embodiment more reliably prevents or reduces degradation of the catalyst 50.

In the present embodiment, the flow passage length L30 of the expansion chamber case 30 is longer than the flow passage length L40 of the catalyst case 40. The flow passage length L30 of the expansion chamber case 30 is twice or more as long as the flow passage length L40 of the catalyst case 40. This facilitates maintaining the internal temperature of the catalyst case 40 at a suitable level. Consequently, the present embodiment more reliably prevents or reduces degradation of the catalyst 50.

In the present embodiment, the catalyst case 40 has a cylindrical shape. The outside diameter D40 of the catalyst case 40 is equal to the inside diameter D32 of the outlet 32 of the expansion chamber case 30. The dimensions of the outlet 32 of the expansion chamber case 30 are substantially equal to the dimensions of the inlet 41 of the catalyst case 40. Exhaust gas smoothly flows into the catalyst case 40 from the expansion chamber case 30. The flow velocity distribution of the exhaust gas is thus kept uniform inside the catalyst case 40. The catalyst 50 is heated evenly by the exhaust gas. Consequently, a portion of the catalyst 50 is prevented from being heated to an excessively high temperature.

If the flow passage length of the exhaust pipe 20 is too short, the performance of the engine 10 may decrease owing to pulsation of exhaust gas. In the present embodiment, however, the flow passage length of the exhaust pipe 20 is longer than the flow passage length of the expansion chamber case 30. The exhaust pipe 20 has a sufficiently long flow passage length and thus prevents or reduces the possibility of a decrease in performance of the engine 10.

As illustrated in FIG. 2, the expansion chamber case 30 is curved such that the expansion chamber case 30 extends upward and then rearward in the vehicle side view. The dimensions of the expansion chamber case 30 in an up-down direction and a front-rear direction are thus relatively small. Consequently, the present embodiment is able to reduce the size of the expansion chamber case 30 while allowing the expansion chamber 33 to have a sufficiently large volume.

As illustrated in FIG. 4, the vehicle width outer end 30o of the expansion chamber case 30 is located inward of the vehicle width outer end 12o of the crankcase 12 in the vehicle width direction. The expansion chamber case 30 thus does not protrude outward of the crankcase 12 in the vehicle width direction. Consequently, the present embodiment reduces the dimensions of an entirety of the engine 10 and an entirety of the expansion chamber case 30 in the vehicle width direction.

As illustrated in FIG. 2, the flow passage width B30 of the expansion chamber case 30 in the vehicle side view is larger than the flow passage width B20 of the exhaust pipe 20 in the vehicle side view. As illustrated in FIG. 4, the flow passage width W30 of the expansion chamber case 30 in the vehicle front view is larger than the flow passage width W20 of the exhaust pipe 20 in the vehicle front view. The present embodiment allows the expansion chamber 33 to have a sufficiently large volume. This enables exhaust gas to decrease in temperature and have a uniform flow velocity distribution before flowing into the catalyst case 40. Consequently, the present embodiment facilitates maintaining the internal temperature of the catalyst case 40 at a suitable level.

As illustrated in FIG. 2, the entirety of the catalyst case 40 overlaps with the cylinder body 13 in the vehicle side view. The distance between the exhaust port 14E and the catalyst case 40 of the motorcycle 1 is thus shorter than that of a motorcycle whose catalyst case 40 is disposed rearward of the cylinder body 13. Consequently, the present embodiment is able to quickly activate the catalyst 50 after the start of the engine 10 while preventing or reducing degradation of the catalyst 50.

A time required for a single-cylinder engine to activate a catalyst after the start of the engine tends to be longer than a time required for a multi-cylinder engine to activate a catalyst after the start of the engine. The present embodiment, however, is able to quickly activate the catalyst 50 after the start of the engine 10 as previously described, although the engine 10 is a single-cylinder engine.

As illustrated in FIG. 4, the expansion chamber case 30 is disposed rightward of the exhaust port 14E, and the exhaust pipe 20 includes the portion 20aa extending downward and leftward. The exhaust pipe 20 extends away from the expansion chamber case 30 (i.e., leftward) and then extends to the expansion chamber case 30. If the flow passage length of the exhaust pipe 20 is too short, the performance of the engine 10 may decrease owing to pulsation of exhaust gas as already mentioned. The present embodiment, however, allows the exhaust pipe 20 to have a sufficiently long flow passage length and thus enables the engine 10 to achieve its intended performance.

In the present embodiment, the expansion chamber case 30 is fitted with the first oxygen sensor 81. The expansion chamber case 30 is thus also used as a portion to be fitted with the first oxygen sensor 81. The present embodiment makes it unnecessary to fit the first oxygen sensor 81 to the exhaust pipe 20 or the catalyst case 40.

In the foregoing embodiment, the entirety of the catalyst case 40 overlaps with the cylinder body 13 in the vehicle side view. Alternatively, only a portion of the catalyst case 40 may overlap with the cylinder body 13.

In the foregoing embodiment, a portion of the expansion chamber case 30 is disposed forward of the cylinder body 13 in the vehicle side view. Alternatively, an entirety of the expansion chamber case 30 may be disposed forward of the cylinder body 13.

The volume of the expansion chamber 33 may be less than twice as large as the inner volume of the catalyst case 40. The volume of the expansion chamber 33 does not necessarily have to be larger than the inner volume of the catalyst case 40. The flow passage length of the expansion chamber case 30 may be less than twice as long as the flow passage length of the catalyst case 40. The flow passage length of the expansion chamber case 30 does not necessarily have to be longer than the flow passage length of the catalyst case 40. The flow passage length of the exhaust pipe 20 does not necessarily have to be longer than the flow passage length of the expansion chamber case 30.

The shape of the catalyst case 40 does not necessarily have to be a cylindrical shape. The catalyst case 40 may have, for example, a rectangular tubular shape. The inside diameter or outside diameter of the catalyst case 40 does not necessarily have to be constant. The outside diameter of the catalyst case 40 does not necessarily have to be equal to the inside diameter of the outlet 32 of the expansion chamber case 30.

The shape of the expansion chamber case 30 is not limited to any particular shape. The expansion chamber case 30 does not necessarily have to be curved. The expansion chamber case 30 may have, for example, a cylindrical shape.

The vehicle width outer end of the expansion chamber case 30 and the vehicle width outer end of the crankcase 12 may be located at the same position in the vehicle width direction. The vehicle width outer end of the expansion chamber case 30 may be located outward of the vehicle width outer end of the crankcase 12 in the vehicle width direction.

The flow passage width of the expansion chamber case 30 in the vehicle side view may be larger than the flow passage width of the exhaust pipe 20 in the vehicle side view, and the flow passage width of the expansion chamber case 30 in the vehicle front view may be equal to or smaller than the flow passage width of the exhaust pipe 20 in the vehicle front view. The flow passage width of the expansion chamber case 30 in the vehicle side view may be equal to or smaller than the flow passage width of the exhaust pipe 20 in the vehicle side view, and the flow passage width of the expansion chamber case 30 in the vehicle front view may be larger than the flow passage width of the exhaust pipe 20 in the vehicle front view.

The engine 10 is not limited to a single-cylinder engine. The engine 10 may be a multi-cylinder engine.

The expansion chamber case 30, the catalyst case 40, the exhaust pipe 60, and the silencer 70 may be disposed rightward of the vehicle central line CL as in the foregoing embodiment or may alternatively be disposed leftward of the vehicle central line CL. The expansion chamber case 30 may be disposed leftward of the exhaust port 14E, and the exhaust pipe 20 may include a portion extending downward and rightward.

The first oxygen sensor 81 does not necessarily have to be fitted to the expansion chamber case 30. The first oxygen sensor 81 may be fitted to any portion other than the expansion chamber case 30. One or both of the first and second oxygen sensors 81 and 82 may be optional.

As used herein, the term "straddled vehicle" refers to any vehicle that a rider straddles when riding on the vehicle. The straddled vehicle is not limited to the motorcycle 1 of an offroad type. The straddled vehicle may be a motorcycle of any other type. The straddled vehicle is not limited to a motorcycle. The straddled vehicle may be, for example, a motor tricycle, an all-terrain vehicle (ATV), or a snowmobile.

### REFERENCE SIGNS LIST

- 1: motorcycle (straddled vehicle)

- 10: internal combustion engine
- 11: crankshaft
- 12: crankcase
- 12o: vehicle width outer end of crankcase
- 13: cylinder body
- 14: cylinder head
- 14E: exhaust port
- 14f: front wall
- 20: exhaust pipe
- 21: upstream end
- 22: downstream end
- 30: expansion chamber case
- 30o: vehicle width outer end of expansion chamber case
- 31: inlet
- 32: outlet
- 33: expansion chamber
- 40: catalyst case
- 41: inlet
- 50: catalyst
- 81: first oxygen sensor (oxygen sensor)

## Claims

1. A straddled vehicle (1) comprising:
an internal combustion engine (10) including
a crankcase (12) supporting a crankshaft (11) such that the crankshaft (11) is rotatable,
a cylinder body (13) extending upward from the crankcase (12),
a cylinder head (14) extending upward from the cylinder body (13), the cylinder head (14) including a front wall (14f), and
an exhaust port (14E) defined in the front wall (14f) of the cylinder head (14), the exhaust port (14E) being configured to discharge exhaust gas;
an exhaust pipe (20) including an upstream end (21) and a downstream end (22), the upstream end (21) being connected to the exhaust port (14E), the exhaust pipe (20) being configured to allow the exhaust gas to flow therethrough;
an expansion chamber case (30) including an inlet (31) and an outlet (32), the inlet (31) being connected to the downstream end (22) of the exhaust pipe (20), the expansion chamber case (30) being internally provided with an expansion chamber (33) to expand the exhaust gas;
a catalyst case (40) including an inlet (41) connected to the outlet (32) of the expansion chamber case (30); and
a catalyst (50) disposed inside the catalyst case (40), wherein
at least a portion of the catalyst case (40) overlaps with the cylinder body (13) in a vehicle side view,
a volume of the expansion chamber (33) is larger than an inner volume of the catalyst case (40), and
the expansion chamber case (30) is curved with a first portion (30a) extends upward from the inlet (31) and with a second portion (30b) that extends rearward from the first portion (30a) to the outlet (32) in the vehicle side view,
**characterized in that** the catalyst case (40) has a cylindrical shape, and
an outside diameter (D40) of the catalyst case (40) is equal to an inside diameter (D32) of the outlet (32) of the expansion chamber case (30) and a vehicle width outer end (30o) of the expansion chamber case (30) is located inward of a vehicle width outer end (12o) of the crankcase (12) in a vehicle width direction.

2. The straddled vehicle (1) according to claim 1, **characterized in that** at least a portion of the expansion chamber case (30) is disposed forward of the cylinder body (13) in the vehicle side view.

3. The straddled vehicle (1) according to claim 1 or 2, **characterized in that** the volume of the expansion chamber (33) is twice or more as large as the inner volume of the catalyst case (40).

4. The straddled vehicle (1) according to any one of claims 1 to 3, **characterized in that** the expansion chamber case (30) has a flow passage length (L30), and the flow passage length (L30) of the expansion chamber case (30) is longer than a flow passage length (L40) of the catalyst case (40) and/or a flow passage length of the exhaust pipe (20) is longer than the flow passage length of the expansion chamber case (30).

5. The straddled vehicle (1) according to claim 4, **characterized in that** the flow passage length (L30) of the expansion chamber case (30) is twice or more as long as the flow passage length (L40) of the catalyst case (40).

6. The straddled vehicle (1) according to any one of claims 1 to 5, **characterized in that** a flow passage width (B30) of the expansion chamber case (30) in the vehicle side view is larger than a flow passage width (B20) of the exhaust pipe (20) in the vehicle side view, and/or a flow passage width (W30) of the expansion chamber case (30) in a vehicle front view is larger than a flow passage width (W20) of the exhaust pipe (20) in the vehicle front view.

7. The straddled vehicle (1) according to any one of claims 1 to 6, **characterized in that** an entirety of the catalyst case (40) overlaps with the cylinder body (13) in the vehicle side view.

8. The straddled vehicle (1) according to any one of claims 1 to 7, **characterized in that** the internal combustion engine (10) is a single-cylinder internal combustion engine.

9. The straddled vehicle (1) according to any one of claims 1 to 8, **characterized in that** the expansion chamber case (30) is disposed rightward of the exhaust port (14E), and the exhaust pipe (20) includes a portion (20aa) extending downward and leftward, or
the expansion chamber case (30) is disposed leftward of the exhaust port (14E), and the exhaust pipe (20) includes a portion extending downward and rightward.

10. The straddled vehicle (1) according to any one of claims 1 to 9, **characterized by** an oxygen sensor (81) fitted to the expansion chamber case (30), the oxygen sensor (81) being configured to detect an oxygen concentration of the exhaust gas.

## Patentansprüche

1. Ein Spreiz-Sitz-Fahrzeug (1), das umfasst:
einen Verbrennungsmotor (10) mit
ein Kurbelgehäuse (12), das eine Kurbelwelle (11) lagert, so dass die Kurbelwelle (11) drehbar ist,
einen Zylinderkörper (13), der sich vom Kurbelgehäuse (12) nach oben erstreckt,
einen Zylinderkopf (14), der sich von dem Zylinderkörper (13) nach oben erstreckt, der Zylinderkopf (14) enthält eine Vorderwand (14f), und
ein Abgasanschluss (14E), der in der Vorderwand (14f) des Zylinderkopfs (14) definiert ist, der Abgasanschluss (14E) so konfiguriert ist, um Abgas abzugeben;
eine Abgasleitung (20), die ein stromaufwärtiges Ende (21) und ein stromabwärtiges Ende (22), wobei das stromaufwärtige Ende (21) mit dem Abgasanschluss (14E) verbunden ist, die Abgasleitung (20) ist konfiguriert ist, um dem Abgas zu gestatten hindurchströmen;
ein Expansionskammergehäuse (30), das einen Einlass (31) und einen Auslass (32) enthält, der Einlass (31) ist dem stromabwärtigen Ende (22) der Abgasleitung (20) verbunden, das Expansionskammergehäuse (30) ist im Inneren mit einer Expansionskammer (33) zum Expandieren des Abgases vorgesehen;
ein Katalysatorgehäuse (40), das einen Einlass (41) enthält, der mit dem Auslass (32) des Expansionskammergehäuses (30) verbunden ist; und
einen Katalysator (50), der im Inneren des Katalysatorgehäuses (40) angeordnet ist, wobei
zumindest ein Abschnitt des Katalysatorgehäuses (40) mit dem Zylinderkörper (13) in einer Fahrzeugseitenansicht überlappt,
ein Volumen der Expansionskammer (33) größer ist als ein Innenvolumen des Katalysatorgehäuses (40), und
das Expansionskammergehäuse (30) mit einem ersten Abschnitt (30a) gekrümmt ist, der sich von dem Einlass (31) nach oben erstreckt, und mit einem zweiten Abschnitt (30b), der sich vom ersten Abschnitt (30a) nach hinten zum Auslass (32) in der Fahrzeugseitenansicht erstreckt,
**dadurch gekennzeichnet, dass** das Katalysatorgehäuse (40) eine zylindrische Form hat, und
ein Außendurchmesser (D40) des Katalysatorgehäuses (40) gleich einem Innendurchmesser (D32) des Auslasses (32) des Expansionskammergehäuses (30) ist und ein Fahrzeugbreiten-Außenende (30o) des Expansionskammergehäuses (30) innerhalb eines Fahrzeugbreiten-Außenendes (12o) des Kurbelgehäuses (12) in einer Fahrzeugbreitenrichtung angeordnet ist.

2. Das Spreiz-Sitz-Fahrzeug (1) gemäß Anspruch 1, **dadurch gekennzeichnet, dass** zumindest ein Abschnitt des Expansionskammergehäuses (30) vor dem Zylinderkörper (13) in der Fahrzeugseitenansicht angeordnet ist.

3. Das Spreiz-Sitz-Fahrzeug (1) gemäß Anspruch 1 oder 2, **dadurch gekennzeichnet, dass** das Volumen der Expansionskammer (33) doppelt so groß oder größer als das Innenvolumen des Katalysatorgehäuses (40) ist.

4. Das Spreiz-Sitz-Fahrzeug (1) gemäß irgendeinem der Ansprüche 1 bis 3, **dadurch gekennzeichnet, dass** das Expansionskammergehäuse (30) eine Strömungskanallänge (L30) hat, und die Strömungskanallänge (L30) des Expansionskammergehäuses (30) länger ist als eine Strömungskanallänge (L40) des Katalysatorgehäuses (40) und/oder eine Strömungskanallänge der Abgasleitung (20) länger ist als die Strömungskanallänge des Expansionskammergehäuses (30).

5. Das Spreiz-Sitz-Fahrzeug (1) gemäß Anspruch 4, **dadurch gekennzeichnet, dass** die Strömungskanallänge (L30) des Expansionskammergehäuses (30) doppelt so lang oder länger ist als die Strömungskanallänge (L40) des Katalysatorgehäuses (40).

6. Das Spreiz-Sitz-Fahrzeug (1) gemäß irgendeinem der Ansprüche 1 bis 5, **dadurch gekennzeichnet, dass** eine Strömungsdurchgangsbreite (B30) des Expansionskammergehäuses (30) in der Fahrzeugseitenansicht größer ist als eine Strömungsdurchgangsbreite (B20) der Abgasleitung (20) in der Fahrzeugseitenansicht und/oder eine Strömungsdurchgangsbreite (W30) des Expansionskammergehäuses (30) in einer Fahrzeugfrontansicht größer ist als eine Strömungsdurchgangsbreite (W20) der Abgasleitung (20) in der Fahrzeugfrontansicht.

7. Das Spreiz-Sitz-Fahrzeug (1) gemäß irgendeinem der Ansprüche 1 bis 6, **dadurch gekennzeichnet, dass** sich das Katalysatorgehäuse (40) in der Fahrzeugseitenansicht vollständig mit dem Zylinderkörper (13) überlappt.

8. Das Spreiz-Sitz-Fahrzeug (1) gemäß irgendeinem der Ansprüche 1 bis 7, **dadurch gekennzeichnet, dass** der Verbrennungsmotor (10) ein Einzylinder-Verbrennungsmotor ist.

9. Das Spreiz-Sitz-Fahrzeug (1) gemäß irgendeinem der Ansprüche 1 bis 8, **dadurch gekennzeichnet, dass** das Expansionskammergehäuse (30) rechts von dem Abgasanschluss (14E) angeordnet ist und die Abgasleitung (20) einen Abschnitt (20aa) enthält, der sich nach unten und nach links erstreckt, oder
das Expansionskammergehäuse (30) links von dem Abgasanschluss (14E) angeordnet ist, und die Abgasleitung (20) einen Abschnitt enthält, der sich nach unten und nach rechts erstreckt.

10. Das Spreiz-Sitz-Fahrzeug (1) gemäß irgendeinem der Ansprüche 1 bis 9, **gekennzeichnet durch** einen Sauerstoffsensor (81), der an dem Expansionskammergehäuse (30) angebracht ist, der Sauerstoffsensor (81) ist konfiguriert, um eine Sauerstoffkonzentration des Abgases zu erfassen.

## Revendications

1. Véhicule à enfourcher (1) comprenant :
un moteur à combustion interne (10) incluant
un carter (12) supportant une tige de carter (11) de sorte que la tige de carter (11) peut être mise en rotation,
un corps de cylindre (13) s'étendant vers le haut depuis le carter (12),
une tête de cylindre (14) s'étendant vers le haut depuis le corps de cylindre (13), la tête de cylindre (14) incluant une paroi avant (14f), et
un orifice d'échappement (14E) défini dans la paroi avant (14f) de la tête de cylindre (14), l'orifice d'échappement (14E) étant conçu pour évacuer du gaz d'échappement ;
une conduite d'échappement (20) incluant une extrémité amont (21) et une extrémité aval (22), l'extrémité amont (21) étant raccordée à l'orifice d'échappement (14E), la conduite d'échappement (20) étant conçue pour permettre au gaz d'échappement de s'écouler à travers ;
un boîtier de chambre d'expansion (30) incluant un orifice d'entrée (31) et un orifice de sortie (32), l'orifice d'entrée (31) étant raccordé à l'extrémité aval (22) de la conduite d'échappement (20), le boîtier de chambre d'expansion (30) étant disposé au plan interne avec une chambre d'expansion (33) pour expanser le gaz d'échappement ;
un boîtier de catalyseur (40) incluant un orifice d'entrée (41) raccordé à l'orifice de sortie (32) du boîtier de chambre d'expansion (30) ; et
un catalyseur (50) disposé à l'intérieur du boîtier de catalyseur (40),
au moins une portion du boîtier de catalyseur (40) chevauchant le corps de cylindre (13) dans une vue latérale du véhicule,
un volume de la chambre d'expansion (33) étant plus grand qu'un volume interne du boîtier de catalyseur (40), et
le boîtier de la chambre d'expansion (30) étant incurvé avec une première portion (30a) s'étendant vers le haut depuis l'orifice d'entrée (31) et avec une seconde portion (30b) qui s'étend vers l'arrière depuis la première portion (30a) vers l'orifice de sortie (32) en vue latérale du véhicule,
**caractérisé en ce que** le boîtier de catalyseur (40) présente une forme cylindrique, et
qu'un diamètre externe (D40) du boîtier de catalyseur (40) est égal à un diamètre interne (D32) de l'orifice de sortie (32) du boîtier de chambre d'expansion (30) et une extrémité externe de largeur de véhicule (30o) du boîtier de chambre d'expansion (30) étant localisée vers l'intérieur d'une extrémité externe de largeur de véhicule (12o) du carter (12) dans un sens de la largeur du véhicule.

2. Véhicule à enfourcher (1) selon la revendication 1, **caractérisé en ce qu'**au moins une portion du boîtier de chambre d'expansion (30) est disposée vers l'avant du corps de cylindre (13) en vue latérale du véhicule.

3. Véhicule à enfourcher (1) selon la revendication 1 ou 2, **caractérisé en ce que** le volume de la chambre d'expansion (33) est aussi grand, de deux fois ou plus, que le volume interne du boîtier de catalyseur (40).

4. Véhicule à enfourcher (1) selon l'une quelconque des revendications 1 à 3, **caractérisé en ce que** le boîtier de chambre d'expansion (30) présente une longueur du passage d'écoulement (L30), et que la longueur du passage d'écoulement (L30) du boîtier de chambre d'expansion (30) est plus longue qu'une longueur du passage d'écoulement (L40) du boîtier de catalyseur (40) et/ou qu'une longueur du passage d'écoulement de la conduite d'échappement (20) est plus longue que la longueur du passage d'écoulement du boîtier de chambre d'expansion (30).

5. Véhicule à enfourcher (1) selon la revendication 4, **caractérisé en ce que** la longueur du passage d'écoulement (L30) du boîtier de chambre d'expansion (30) est aussi longue, de deux fois ou plus, que la longueur du passage d'écoulement (L40) du boîtier de catalyseur (40).

6. Véhicule à enfourcher (1) selon l'une quelconque des revendications 1 à 5, **caractérisé en ce qu'**une largeur du passage d'écoulement (B30) du boîtier de chambre d'expansion (30) en vue latérale du véhicule est plus grande qu'une largeur du passage d'écoulement (B20) de la conduite d'échappement (20) en vue latérale du véhicule, et/ou une largeur du passage d'écoulement (W30) du boîtier de chambre d'expansion (30) dans une vue de face du véhicule est plus grande qu'une largeur du passage d'écoulement (W20) de la conduite d'échappement (20) dans la vue de face du véhicule.

7. Véhicule à enfourcher (1) selon l'une quelconque des revendications 1 à 6, **caractérisé en ce qu'**une intégralité du boîtier de catalyseur (40) chevauche le corps de cylindre (13) en vue latérale du véhicule.

8. Véhicule à enfourcher (1) selon l'une quelconque des revendications 1 à 7, **caractérisé en ce que** le moteur à combustion interne (10) est un moteur à combustion interne à cylindre unique.

9. Véhicule à enfourcher (1) selon l'une quelconque des revendications 1 à 8, **caractérisé en ce que** le boîtier de chambre d'expansion (30) est disposé vers la droite de l'orifice d'échappement (14E), et que la conduite d'échappement (20) inclut une portion (20aa) s'étendant vers le bas et vers la gauche, ou
le boîtier de chambre d'expansion (30) est disposé vers la gauche de l'orifice d'échappement (14E), et la conduite d'échappement (20) inclut une portion s'étendant vers le bas et vers la droite.

10. Véhicule à enfourcher (1) selon l'une quelconque des revendications 1 à 9, **caractérisé par** un capteur d'oxygène (81) ajusté au boîtier de chambre d'expansion (30), le capteur d'oxygène (81) étant conçu pour détecter une concentration en oxygène du gaz d'échappement.
